# FASCICULE DE BREVET EUROPEEN

(11) **EP 1 379 704 B1**
(45) Date de publication et mention de la délivrance du brevet: **14.05.2008**
(21) Numéro de dépôt: 02761935.2
(22) Date de dépôt: 12.04.2002
(51) Int. Cl.: C22B 34/14, C01G 25/04, C01G 27/04, B01D 5/00, B01D 3/40

(54) **PROCEDE DE SEPARATION DES TETRACHLORURES DE ZIRCONIUM ET DE HAFNIUM A L'AIDE D'UN SOLVENT FONDU**
VERFAHREN ZUM TRENNEN VON ZIRKONIUM- UND HAFNIUMCHLORID UNTER ZUHILFENAHME EINER LÖSUNGSMITTELSCHMELZE
METHOD FOR SEPARATING ZIRCONIUM AND HAFNIUM TETRACHLORIDE WITH THE AID OF A MELTED SOLVENT

(30) Priorité: 18.04.2001 FR 0105262
(43) Date de publication de la demande: 14.01.2004
(73) Titulaire: Compagnie Européenne du Zirconium CEZUS, 92400 Courbevoie (FR)
(72) Inventeur: DELONS, Laurence, F-38400 Saint Martin D'heres (FR); PICARD, Gérard, F-94120 Fontenay Sous Bois (FR); TIGREAT, Delphine, F-06600 Antibes (FR)
(74) Mandataire: Jacobson, Claude
(86) Numéro de dépôt international: PCT/FR2002/001292
(87) Numéro de publication internationale: WO 2002/083960

(56) Documents cités:
- FR-A- 2 250 707
- US-A- 4 749 448
- US-A- 4 874 475
- TRICOT R: "METALLURGIE, PROPRIETES ET EMPLOI DU HAFNIUM" MEMOIRES ET ETUDES SCIENTIFIQUES DE LA REVUE DE METALLURGIE, REVUE DE METALLURGIE. PARIS, FR, vol. 88, no. 11, 1 novembre 1991 (1991-11-01), pages 747-759, XP000278165 ISSN: 0245-8292

## Description

La présente invention est relative à un perfectionnement du procédé de séparation du zirconium et de l'hafnium par distillation extractive en sels fondus.

Le zirconium possède une très faible section de capture des neutrons et pour cette raison il est utilisé dans les réacteurs nucléaires. Le minerai zircon contient cependant toujours de l'hafnium, à raison d'environ 1 à 3 % en poids. Au contraire du zirconium, l'hafnium absorbe fortement les neutrons et est donc susceptible de fortement réduire le flux de neutrons dans les réacteurs nucléaires. L'usage du zirconium dans le domaine nucléaire nécessite donc l'élimination préalable de l'hafnium, une teneur inférieure à 100 ppm étant souvent préconisée.

Hafnium et zirconium ont des propriétés très proches et leur séparation en est rendue extrêmement difficile. Différentes voies ont été proposées et utilisées. A l'heure actuelle, seuls quelques procédés ont été reconnus et appliqués à l'échelle industrielle. Il s'agit du procédé par cristallisations multiples du fluorure de potassium et de zirconium, des techniques d'extraction liquide-liquide à l'aide de différents solvants organiques, e.g. le TBP en milieu acide (acide nitrique), la n-octylamine en milieu acide (acide sulfurique), le MIBK, et enfin de la distillation des chlorures (D. Sathiyamoorthy et al., High Temperature Materials and Processes 1999, vol.18, n° 4, 213-226).

Classiquement, avant la mise en oeuvre de la distillation extractive et de certaines techniques d'extraction liquide-liquide, on réalise une carbochloration du minerai, ce qui produit les tétrachlorures ZrCl₄ et HfCl₄. Dans le cas de l'extraction liquide-liquide, ces chlorures doivent être mis en solution aqueuse et l'extraction conduit à la formation de ZrO₂ et HfO₂ ce qui nécessite alors une nouvelle carbochloration du zirconium avant de passer à la phase de récupération du métal Zr.

Le procédé par distillation extractive utilise une colonne de distillation comportant plusieurs plateaux qui supportent chacun une couche de sels fondus. Les chlorures sont introduits à l'état gazeux. ZrCl₄ est récupéré dans la phase solvant en pied de colonne. HfCl₄ est entraîné avec la phase gazeuse en tête de colonne. Différents solvants ont été proposés : chlorozirconate et chlorohafnate de sodium FR-A-1 537 218 ; oxychlorure de phosphore US-A-1 582 860 ; chlorure de zinc pur; chlorure d'étain anhydre US-A-2 816 814 ; chlorure de métal alcalin + chlorure d'aluminium ou de fer US-A-2 928 722 ; chlorure de sodium US-A-3 671 186 ; chloroaluminate ou chloroferrate alcalin FR-A-2 250 707 (US-A-4 021 531), FR-A-2 543 162 ; chlorures de sodium et de potassium US-A-3 966 458 ; chlorure de zinc et chlorure de plomb US-A-4 737 244 ; chlorure de zinc + chlorure de calcium ou de magnésium US-A-4 749 448 ; et chlorure de lithium + au moins un chlorure choisi parmi ceux de sodium, potassium, magnésium et calcium US-A-4 874 475.

Ces différentes techniques de séparation présentent leurs avantages et leurs inconvénients. On a déjà vu que l'extraction liquide-liquide nécessite des étapes de mise en solution des chlorures et une deuxième carbochloration. Le solvant MIBK est volatile et très explosif, ce qui pose des problèmes de manipulation et de retraitement des effluents, ce qui n'empêche pas qu'une partie significative de la production mondiale de Zr est basée sur cette technique. Le solvant TBP se révèle moins performant et plus coûteux, ce qui explique son abandon progressif. Voir A.B.V. da Silva, Jr. et P.A. Distin, CIM Bulletin 1998 vol. 91, n° 1018, 221-224.

Un inconvénient de la distillation extractive résulte du fait que le métal recherché, le Zr, se retrouve dans la phase solvant, ce qui nécessite ensuite sa récupération et donc la mise en oeuvre d'étapes supplémentaires, ce qui induit un coût non négligeable. Selon da Silva et Distin supra, les principaux inconvénients de cette technique sont le facteur de séparation peu élevé, ce qui nécessite un grand nombre d'étages (environ 90), ainsi que le caractère fortement corrosif des solvants et les contraintes liées à l'emploi de courants de vapeur, ce qui a aussi un impact sur le choix des matériels mis en oeuvre. Toujours selon ces auteurs, le coût d'une installation fonctionnant avec ce procédé est donc élevé, et devrait constituer un frein à son utilisation pour de nouvelles installations. Finalement, ce document conclut que l'avenir est plutôt dans l'extraction liquide-liquide avec de nouveaux solvants aqueux.

Prenant le contre-pied de ce document, la demanderesse s'est donnée pour objectif d'améliorer la productivité, c'est-à-dire l'efficacité de séparation, du procédé par distillation extractive en sels fondus, amélioration qui puisse aussi s'appliquer aux installations de distillation existantes.

Ce faisant, elle a trouvé qu'en utilisant de nouveaux solvants, l'efficacité de la séparation est accrue. On note par ailleurs qu'il est possible d'inverser le processus de séparation et de récupérer la phase gazeuse enrichie en Zr en tête de colonne. Il est en outre possible de travailler à température inférieure à la température habituellement préconisée et même d'augmenter encore le facteur de séparation qui croît à l'inverse de la température. Les conséquences sont considérables. Il devient possible d'alléger les étapes supplémentaires de récupération en aval de la distillation. Il est aussi possible de réduire le nombre d'étages de distillation. Et ceci a une incidence importante en termes de réduction du coût de fonctionnement des installations existantes et des coûts d'installation et de fonctionnement de nouvelles unités. D'autres avantages seront indiqués plus loin.

Conformément à la présente invention, ces objectifs et résultats sont atteints par un procédé de séparation en continu des tétrachlorures de zirconium et de hafnium par absorption sélective de leurs vapeurs par un solvant fondu (substantiellement ou totalement fondu) circulant à contre-courant desdites vapeurs dans une colonne à distiller, ce solvant fondu comprenant au moins un solvant métallique alcalin du type de ceux habituellement utilisés en distillation extractive du zirconium, c'est-à-dire préférentiellement au moins un sel d'un chlorure de métal alcalin et d'un chlorure métallique acide A, tel que AlCl₃ ou FeCl₃ (ce qui donne un chloroaluminate ou un chloroferrate alcalin). A ce "solvant de base", on ajoute un ou plusieurs chlorures métalliques ou métalloïdiques acides B plus faibles que celui ou ceux entrant dans la composition dudit "solvant de base", conduisant ainsi à un sel fondu au moins ternaire.

Par définition, un chlorure est dit acide s'il est susceptible de se lier avec des ions Cl⁻. Par "plus faible" parlant de l'acidité du chlorure métallique B, on entend que l'élément lié au chlore dans ce chlorure métallique (ou métalloïdique) acide B a une affinité pour les ions Cl⁻ inférieure à celle de l'élément lié au chlore dans le chlorure métallique acide A. L'acidité du chlorure ou d'un mélange de chlorures, c'est-à-dire son pCl défini par pCl = log[Cl⁻], peut être déterminée de manière simple à partir de la mesure du potentiel libre du chlorure ou du mélange. Il suffit de le mesurer sur un fil d'aluminium et par rapport à une électrode de référence composée d'un fil d'aluminium trempant dans un mélange AlCl₃-KCl saturé en KCl. Le pCl est obtenu par la formule : E = E₀ - (4RT/3F)ln[Cl⁻] avec :
E₀ = potentiel libre du chlorure ou du mélange de chlorures
R = constante = 8,314
T = température en Kelvins
F = constante de Faraday
In[Cl⁻] = logarithme népérien de la concentration en ion Cl⁻.

Les chlorures métalliques ou métalloïdiques acides B sont notamment choisis parmi les chlorures d'alcalino-terreux (e.g. Mg), les chlorures de métaux de transition (e.g. Zn, Cu, Ni, Co, et éventuellement Fe ; Zn et Cu étant préférés parmi les métaux de transition), ou certains métalloïdes tels que Pb et Sn. Préférentiellement, les chlorures métalliques acides B sont au degré d'oxydation Il. Avantageusement ils possèdent en outre une coordinence de 4 dans le mélange. Il s'agit de préférence du chlorure de magnésium MgCl₂ et/ou du chlorure de zinc ZnCl₂.

La présente invention a vocation à s'appliquer aux solvants, formés d'un chlorure de métal alcalin et d'un chlorure métallique acide (chlorure de métalloïde ou de métal de transition), que l'on rencontre dans l'art antérieur, e.g. chloroaluminates ou chloroferrates, sans toutefois y être limitée. Plus particulièrement, dans le "solvant de base", le chlorure de métal alcalin peut comprendre comme métal Li, Na, K, Cs. On préfère KCl et NaCl. Le chlorure métallique acide A et le chlorure métallique ou métalloïdique acide B sont choisis de façon à respecter la règle de plus faible acidité de B/A énoncée ci-dessus. De préférence, le chlorure métallique acide A est AlCl₃ et/ou FeCl₃. On préfère avoir les combinaisons AlCl₃ + KCl et/ou FeCl₃ + NaCl comme solvant de base. Il est possible d'utiliser AlCl₃ dans le solvant de base et un chlorure de fer comme chlorure métallique ou métalloïdique acide B. Dans ce cas, le chlorure de fer est de préférence FeCl₂.

Conformément aux modes de réalisation préférés de l'invention, on a :
- solvant de base :
   AlCl₃ et/ou FeCl₃ comme chlorure métallique acide A, de préférence avec KCl et/ou NaCl comme chlorure de métal alcalin ;
   plus préférentiellement AlCl₃ + KCl et/ou FeCl₃ + NaCl ;
- chlorure métallique acide B :
   MgCl₂ et/ou ZnCl₂ et/ou CuCl₂, de préférence MgCl₂ et/ou ZnCl₂.

Avantageusement, le rapport molaire chlorure métallique acide A (e.g. chlorure d'aluminium et/ou chlorure ferrique) sur chlorure de métal alcalin est compris entre 0,7 et 1,3. Il est de préférence compris entre 0,8 et 1.

Le rapport molaire chlorure métallique ou métalloïdique acide B sur chlorure métallique acide A (e.g. chlorure d'aluminium et/ou chlorure ferrique) est avantageusement compris entre 0,01 et 1,5, de préférence entre 0,1 et 0,3.

Le procédé peut notamment être conduit à une température comprise entre environ 250 et environ 550 °C. Il est cependant plus efficace de travailler dans la partie basse de l'intervalle. L'efficacité de la séparation croît en effet à l'inverse de la température. Suivant une particularité avantageuse de l'invention, la température est comprise entre environ 250 et environ 350 °C. La limite basse de la plage de température est choisie de telle façon que le solvant soit substantiellement fondu, de préférence fondu dans sa totalité, et elle peut dans certains cas, e.g. pour certains solvants, être inférieure à 250 °C. Ces basses températures confèrent au procédé deux avantages considérables. Cela permet de réduire dans de fortes proportions la dépense énergétique, déjà réduite par la possibilité de diminuer le nombre de plateaux à efficacité de séparation identique par rapport à la technique antérieure. La corrosion du matériel est aussi fortement réduite, ce qui est extrêmement favorable du point de vue coût d'installation et de maintenance.

La distillation est en général effectuée à la pression atmosphérique.

La présente invention a aussi pour objet l'utilisation d'un solvant comprenant au moins un solvant métallique alcalin de base, tel que décrit ici, et au moins un solvant métallique acide B tel que décrit ici, de préférence substantiellement ou totalement fondu, pour la séparation des tétrachlorures de zirconium et de hafnium. Cette utilisation ne se limite pas à la distillation en sel fondu qui vient d'être décrite, mais peut recouvrir toute autre méthode permettant de séparer les tétrachlorures de zirconium et de hafnium. On met en contact des vapeurs de tétrachlorures de zirconium et de hafnium avec le solvant selon l'invention, et l'on sépare les tétrachlorures par différence d'affinité du solvant vis-à-vis de ces tétrachlorures.

Suivant une particularité avantageuse, le procédé et l'utilisation conformes à l'invention visent à enrichir la phase vapeur en tête de colonne en tétrachlorure de zirconium et donc à le récupérer en phase gazeuse en tête de colonne.

L'invention va être maintenant décrite plus en détail à l'aide de modes de réalisation pris à titre d'exemples non limitatifs et se référant au dessin dans lequel :
- la figure 1 représente de façon schématique une installation de séparation permettant de mettre en oeuvre le procédé selon l'invention ; et
- la figure 2 représente schématiquement un dispositif de laboratoire permettant d'étudier le fonctionnement du procédé selon l'invention.

**Exemple 1** - Exemple d'installation permettant de mettre en oeuvre le procédé selon l'invention.

L'installation comporte un moyen 1 d'alimentation d'une colonne de distillation 2 en vapeurs de tétrachlorure de zirconium brut contenant du tétrachlorure de hafnium. Une pompe 3 assure la circulation du solvant d'extraction selon l'invention de haut en bas dans la colonne de distillation, à contre-courant des vapeurs de tétrachlorures de zirconium et de hafnium. Ce solvant parcourt en circuit fermé l'absorbeur condenseur 4, la colonne 2, le bouilleur 5, la colonne de stripping 6 et le réservoir 7 d'où il est renvoyé à nouveau par la pompe 3 en direction de l'absorbeur condenseur 4.

Le solvant peut être par exemple un mélange de AlCl₃/KCl et de MgCl₂, avec les rapports molaires suivants :

| | |
|---|---|
| 0,7<Al/K<1,3 | de préférence 0,8<Al/K<1 |
| 0,01<Mg/Al<1,5 | de préférence 0,1 <Mg/Al<0,3 |

Les vapeurs enrichies en tétrachlorure de zirconium au cours de leur ascension dans la colonne 2 par échange avec le solvant circulant à contre-courant, sortent de la colonne 2 à sa partie supérieure, puis traversent l'absorbeur condenseur 4 dans lequel elles saturent le solvant. Une fraction de ces vapeurs, non retenue par le solvant, se dégage de l'absorbeur condenseur 4 et vient se condenser dans le condenseur 8 qui est relié à l'atmosphère par une tubulure d'évent 9, et comporte un moyen de soutirage 10 qui permet de soutirer le condensat enrichi en tétrachlorure de zirconium.

A la base de la colonne 2, le bouilleur 5, dont la température est réglée entre 250 et 550 °C, de préférence entre 250 et 350 °C, reçoit la solution de tétrachlorure de hafnium dans le solvant qui s'est appauvri en tétrachlorure de zirconium au cours de sa descente à travers la colonne 2. Cette solution passe du bouilleur 5 dans la colonne de stripping 6 à travers une vanne 11 de contrôle de débit qui est commandée de façon à maintenir un niveau de solvant sensiblement constant à la base de la colonne 2. Dans la colonne de stripping 6, le tétrachlorure de hafnium appauvri en tétrachlorure de zirconium est extrait du solvant au moyen d'un courant de gaz neutre, tel que l'azote, circulant de bas en haut dans cette colonne, à contre-courant du solvant, et entraînant à la partie supérieure les vapeurs de tétrachlorure de hafnium qui sont ainsi extraites du solvant. Ces vapeurs, contenant un résidu d'AlCl₃, sont entraînées par le courant de gaz neutre à travers un dispositif 12 d'élimination de l'aluminium tel que décrit par exemple dans FR-A-2 543 162. A la sortie de ce dispositif 12, les vapeurs de tétrachlorure de hafnium sont entraînées dans le condenseur 13 et le tétrachlorure de hafnium purifié est soutiré en **14**. Le gaz neutre est entraîné en circuit fermé par le surpresseur 15, les pertes étant compensées par un moyen d'introduction de gaz neutre en 16 et les surpressions éventuelles étant limitées par une soupape en 17. On peut utiliser comme gaz neutre de l'azote ou d'autres gaz non réactifs vis-à-vis des composés ou des matériaux mis en oeuvre. On peut aussi, au lieu de faire circuler un gaz neutre, favoriser le dégagement des vapeurs de tétrachlorure de hafnium dans la colonne 6 et leur passage à travers le dispositif 12 en mettant sous pression réduite le condenseur 13 au moyen d'une pompe à vide.

L'utilisation d'un solvant conforme à l'invention dans une telle installation permet de sortir le tétrachlorure de zirconium à l'état gazeux en tête de colonne, lequel peut être directement récupéré, sans nécessiter les étapes habituelles de stripping et d'élimination de l'aluminium lorsque le tétrachlorure de zirconium était entraîné par le solvant dans la technique antérieure. Cette installation permet une purification du tétrachlorure de zirconium aussi poussée qu'on le désire et avec un nombre de plateaux moindre que dans la technique antérieure. La teneur résiduelle en tétrachlorure de hafnium dépend du nombre de plateaux de la colonne et du réglage des conditions opératoires. Dans la pratique, on peut ainsi utiliser une colonne comportant moins de plateaux. En outre, la plage de température optimale est inférieure à la technique antérieure, ce qui permet de limiter les problèmes de corrosion du matériel et de réduire considérablement la dépense énergétique.

L'installation permet aussi de récupérer du tétrachlorure de hafnium qui peut être valorisé.

**Exemple 2** - Cet exemple compare l'efficacité de séparation en fonction de la composition du solvant fondu. Il compare entre eux des solvants selon l'invention, ainsi qu'avec des solvants de l'art antérieur dont ils se distinguent par la présence en plus du chlorure acide. Le dispositif utilisé, décrit ci-dessous, équivaut sensiblement à un plateau de colonne.

Tous les solvants utilisés dans cet exemple comprennent à la base un chloroaluminate alcalin formé de chlorure d'aluminium AlCl₃ et de chlorure de potassium KCl dans les rapports indiqués dans le tableau suivant.

Le solvant 1 ne comprend pas de chlorure acide B, au contraire des solvants 2, 3 et 4 conformes à l'invention. Le chlorure acide B est ici du chlorure de magnésium MgCl₂ et les rapports molaires Mg/Al sont indiqués dans le tableau suivant.

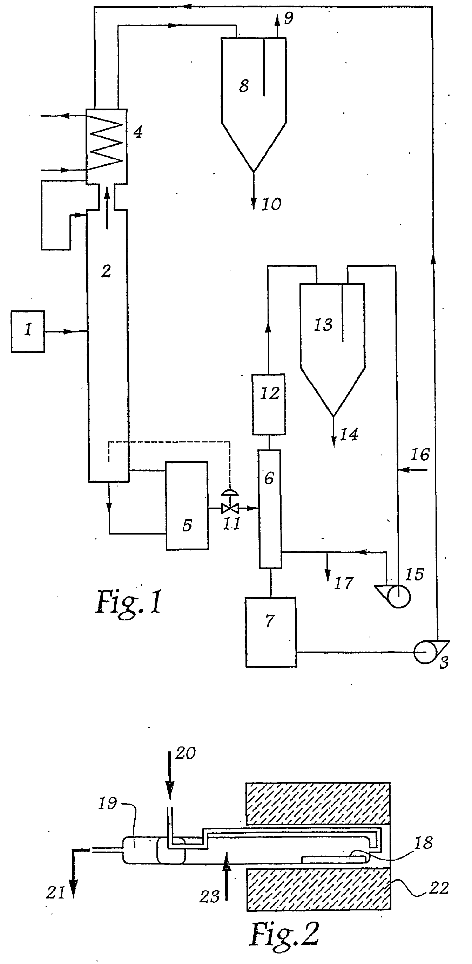

Les mélanges de solvant et de tétrachlorure de zirconium + tétrachlorure de hafnium sont préparés en boîte à gants. Ils sont ensuite (voir figure 2) placés dans une nacelle 18 introduite dans un réacteur long 19 en silice. L'ensemble est placé sous circulation d'argon (entrée en 20, sortie en 21) et introduit dans un four tubulaire 22 préalablement porté à la température choisie. Une partie du réacteur 19 est maintenue hors du four 22 pour constituer un point froid symbolisé en 23 sur lequel les vapeurs se condensent. Au bout d'1 heure en température, le condensat et le résidu restant dans la nacelle 18 sont récupérés et analysés par ICP (Inductively Coupled Plasma Emission Spectrosçopy).

| | Al/K | Mg/Al | pCl | Zr/Hf initial (a) | Zr/Hf condensat (b) | | Enrichissement¹ |
|---|---|---|---|---|---|---|---|
| solvant 1 | 1,04 | 0 | ∼4,8 | 20 | T=350°C | 17 | 1/1,18 |
| solvant 2 | 0,869 | 0,21 | 2,2<pCl< 2,8 | 20 | T=250°C | 45 | 2,25 |
| | | | | | T=340°C | 32 | 1,60 |
| | | | | | T=350°C | 25 | 1,25 |
| Solvant 3 | 0,872 | 0,21 | 2,6<pCl< 3,5 | 20 | T=350°C | 39 | 1,95 |
| Solvant 4 | 1,07 | 0,21 | 3,1 <pCl< 4 | 20 | T=250°C | 29 | 1,45 |
| | | | | | T=340°C | 27 | 1,35 |
| | | | | | T=350°C | 24 | 1,20 |

| | | | | | | | |
|---|---|---|---|---|---|---|---|
| 1 : enrichissement de la phase vapeur en Zr = (b)/(a) | | | | | | | |

Les résultats de la colonne Zr/Hf dans le condensat mettent en évidence une efficacité de séparation accrue lorsqu'on utilise les solvants conformes à l'invention par rapport aux solvants de l'art antérieur qui ne comprennent pas de chlorure acide hormis ceux du "solvant de base".

Les résultats du tableau mettent aussi en évidence l'inversion de la séparation avec les solvants de l'invention. Ils font aussi ressortir que l'efficacité de la séparation croît à l'inverse de la température.

L'efficacité de séparation est maximale à 250°C pour un solvant de type 2. Un plateau permet d'enrichir 2,25 fois la phase riche en tétrachlorure de zirconium, alors que sans le chlorure de magnésium, l'enrichissement est de seulement 1,18 fois. Moins de plateaux sont donc nécessaires pour réduire la teneur en hafnium du tétrachlorure de zirconium brut de par exemple 3% (teneur moyenne dans le minerai zircon) à 100ppm ou moins (teneur généralement acceptée dans l'industrie nucléaire). Le solvant 2 n'étant pas entièrement fondu à 250°C, on peut opérer et de préférence on opère à une température légèrement supérieure, par exemple entre 300 et 350° C. La séparation reste très efficace.

Il doit être bien compris que l'invention définie par les revendications annexées n'est pas limitée aux modes de réalisation particuliers indiqués dans la description ci-dessus, mais englobe les variantes qui ne sortent pas du libellé des revendications annexées.

## Revendications

1. Procédé de séparation en continu des tétrachlorures de zirconium et de hafnium par absorption sélective de leurs vapeurs par un solvant substantiellement ou totalement fondu, circulant à contre-courant desdites vapeurs dans une colonne à distiller, **caractérisé en ce que** le solvant fondu comprend d'une part un solvant métallique alcalin comprenant un sel d'un chlorure de métal alcalin et d'un chlorure métallique acide A, et d'autre part un chlorure métallique ou métalloïdique acide B ayant une acidité inférieure à celle du chlorure métallique acide A.

2. Procédé selon la revendication 1, **caractérisé en ce que** le solvant fondu comprend un chloroaluminate ou un chloroferrate alcalin ou un mélange des deux, et un chlorure métallique ou métalloïdique acide B.

3. Procédé selon la revendication 1 ou 2, **caractérisé en ce que** le chlorure métallique ou métalloïdique acide B comprend un chlorure d'un alcalino-terreux et/ou d'un métal de transition et/ou d'un métalloïde.

4. Procédé selon la revendication 3, **caractérisé en ce que** le chlorure métallique ou métalloïdique acide B a un degré d'oxydation égal à 2 et de préférence une coordinence de 4.

5. Procédé selon la revendication 3 ou 4, **caractérisé en ce que** le métal est choisi dans le groupe consistant en Mg, Zn, Cu, Ni, Co, Fe, Pb, Sn, de préférence Mg, Zn, Cu.

6. Procédé selon la revendication 3, **caractérisé en ce que** le chlorure métallique ou métalloïdique acide B est un chlorure de magnésium et/ou un chlorure de zinc.

7. Procédé selon l'une quelconque des revendications 1 à 6, **caractérisé en ce que**, dans le solvant alcalin, le chlorure de métal alcalin comprend comme métal Li, Na, K ou Cs, de préférence K ou Na.

8. Procédé selon l'une quelconque des revendications 1 à 6, **caractérisé en ce que**, dans le solvant alcalin, le chlorure métallique acide A comprend AlCl₃ et/ou FeCl₃.

9. Procédé selon l'une quelconque des revendications 1 à 6, **caractérisé en ce que**, le solvant alcalin comprend AlCl₃ + KCl et/ou FeCl₃ + NaCl.

10. Procédé selon l'une quelconque des revendications 1 à 9, **caractérisé en ce que**, dans le solvant alcalin, le rapport molaire chlorure métallique acide A sur chlorure de métal alcalin est compris entre 0,7 et 1,3, de préférence entre 0,8 et 1.

11. Procédé selon l'une quelconque des revendications 1 à 10, **caractérisé en ce que** le rapport molaire chlorure métallique ou métalloïdique acide B sur chlorure métallique acide A compris entre 0,01 et 1,5, de préférence entre 0,1 et 0,3.

12. Procédé selon l'une quelconque des revendications 1 à 11, **caractérisé en ce que** le procédé est conduit à une température comprise entre environ 250 et environ 550 °C, de préférence entre environ 250 et environ 350 °C.

13. Utilisation d'un solvant tel que décrit à l'une quelconque des revendications 1 à 11, pour la séparation des tétrachlorures de zirconium et de hafnium.

14. Utilisation selon la revendication 13, **caractérisée en ce que** le solvant est utilisé partiellement, substantiellement ou totalement fondu.

## Claims

1. Process for the continuous separation of zirconium and hafnium tetrachlorides by selective absorption of their vapours by a substantially or totally molten solvent which flows countercurrently to said vapours in a distillation column, **characterised in that** the molten solvent comprises on the one hand an alkaline metallic solvent comprising a salt of an alkali metal chloride and an acidic metal chloride A, and on the other hand an acidic metal or metalloid chloride B having an acidity lower than that of the acidic metal chloride A.

2. Process according to claim 1, **characterised in that** the molten solvent comprises an alkaline chloroaluminate or chloroferrate or a mixture thereof, and an acidic metal or metalloid chloride B.

3. Process according to claim 1 or 2, **characterised in that** the acidic metal or metalloid chloride B comprises a chloride of an alkaline earth and/or of a transition metal and/or of a metalloid.

4. Process according to claim 3, **characterised in that** the acidic metal or metalloid chloride B has a degree of oxidation equal to 2 and preferably a coordination number of 4.

5. Process according to claim 3 or 4, **characterised in that** the metal is selected from the group consisting of Mg, Zn, Cu, Ni, Co, Fe, Pb, Sn, preferably Mg, Zn, Cu.

6. Process according to claim 3, **characterised in that** the acidic metal or metalloid chloride B is a magnesium chloride and/or a zinc chloride.

7. Process according to any one of claims 1 to 6, **characterised in that**, in the alkaline solvent, the alkali metal chloride comprises as the metal Li, Na, K or Cs, preferably K or Na.

8. Process according to any one of claims 1 to 6, **characterised in that**, in the alkaline solvent, the acidic metal chloride A comprises AlCl₃ and/or FeCl₃.

9. Process according to any one of claims 1 to 6, **characterised in that** the alkaline solvent comprises AlCl₃ + KCl and/or FeCl₃ + NaCl.

10. Process according to any one of claims 1 to 9, **characterised in that**, in the alkaline solvent, the molar ratio of acidic metal chloride A to alkali metal chloride is from 0.7 to 1.3, preferably from 0.8 to 1.

11. Process according to any one of claims 1 to 10, **characterised in that** the molar ratio of acidic metal or metalloid chloride B to acidic metal chloride A is from 0.01 to 1.5, preferably from 0.1 to 0.3.

12. Process according to any one of claims 1 to 11, **characterised in that** the process is carried out at a temperature of from approximately 250 to approximately 550°C, preferably from approximately 250 to approximately 350°C.

13. Use of a solvent as described in any one of claims 1 to 11 in the separation of zirconium and hafnium tetrachlorides.

14. Use according to claim 13, **characterised in that** the solvent is used partially, substantially or totally molten.

## Patentansprüche

1. Verfahren zur kontinuierlichen Trennung der Tetrachloride von Zirkonium und Hafnium durch selektive Absorption ihrer Dämpfe durch ein im Wesentlichen oder vollständig geschmolzenes Lösungsmittel, das im Gegenstrom zu diesen Dämpfen in einer Destillationskolonne zirkuliert, **dadurch gekennzeichnet, dass** das geschmolzene Lösungsmittel zum einen ein Alkalimetalllösungsmittel, das ein Salz eines Alkalimetallchlorids und eines sauren Metallchlorids A umfasst, und zum anderen ein saures Metall- oder Halbmetallchlorid [Metalloidchlorid] B mit einer geringeren Azidität als der des sauren Metallchlorids A umfasst.

2. Verfahren gemäß Anspruch 1, **dadurch gekennzeichnet, dass** das geschmolzene Lösungsmittel ein Alkalichloraluminat oder -chlorferrat oder ein Gemisch der beiden und ein saures Metall- oder Halbmetallchlorid B umfasst.

3. Verfahren gemäß Anspruch 1 oder 2, **dadurch gekennzeichnet, dass** das saure Metall- oder Halbmetallchlorid B ein Erdalkali- und/oder Übergangsmetall- und/oder Halbmetallchlorid umfasst.

4. Verfahren gemäß Anspruch 3, **dadurch gekennzeichnet, dass** das saure Metall- oder Halbmetallchlorid B eine Oxidationsstufe von 2 und bevorzugt eine Koordinationszahl von 4 aufweist.

5. Verfahren gemäß Anspruch 3 oder 4, **dadurch gekennzeichnet, dass** das Metall aus der aus Mg, Zn, Cu, Ni, Co, Fe, Pb und Sn, bevorzugt Mg, Zn und Cu bestehenden Gruppe ausgewählt ist.

6. Verfahren gemäß Anspruch 3, **dadurch gekennzeichnet, dass** das saure Metall- oder Halbmetallchlorid B ein Magnesiumchlorid und/oder Zinkchlorid ist.

7. Verfahren gemäß einem der Ansprüche 1 bis 6, **dadurch gekennzeichnet, dass** in dem Alkalilösungsmittel das Alkalimetallchlorid Li, Na, K oder Cs, bevorzugt K oder Na als Metall umfasst.

8. Verfahren gemäß einem der Ansprüche 1 bis 6, **dadurch gekennzeichnet, dass** in dem Alkalilösungsmittel das saure Metallchlorid A AlCl₃ und/oder FeCl₃ umfasst.

9. Verfahren gemäß einem der Ansprüche 1 bis 6, **dadurch gekennzeichnet, dass** das Alkalilösungsmittel AlCl₃ + KCl und/oder FeCl₃ + NaCl umfasst.

10. Verfahren gemäß einem der Ansprüche 1 bis 9, **dadurch gekennzeichnet, dass** in dem Alkalilösungsmittel das Molverhältnis saures Metallchlorid A zu Alkalimetallchlorid zwischen 0,7 und 1,3, bevorzugt zwischen 0,8 und 1 beträgt.

11. Verfahren gemäß einem der Ansprüche 1 bis 10, **dadurch gekennzeichnet, dass** das Molverhältnis saures Metall- oder Halbmetallchlorid B zu saurem Metallchlorid A zwischen 0,01 und 1,5, bevorzugt zwischen 0,1 und 0,3 beträgt.

12. Verfahren gemäß einem der Ansprüche 1 bis 11, **dadurch gekennzeichnet, dass** das Verfahren bei einer Temperatur zwischen etwa 250 und etwa 550 °C, bevorzugt zwischen etwa 250 und etwa 350 °C durchgeführt wird.

13. Verwendung eines wie in einem der Ansprüche 1 bis 11 beschriebenen Lösungsmittels zur Trennung der Tetrachloride von Zirkonium und Hafnium.

14. Verwendung gemäß Anspruch 13, **dadurch gekennzeichnet, dass** das Lösungsmittel teilweise, im Wesentlichen oder vollständig geschmolzen verwendet wird.
